# EUROPEAN PATENT APPLICATION

(11) **EP 4 151 492 A1**
(43) Date of publication of application: **22.03.2023**
(21) Application number: 21380004.8
(22) Date of filing: 16.09.2021
(51) Int. Cl.: B61D 27/00, B61L 15/00, G06V 20/52

(54) **PREDICTIVE AIR RENOVATION SYSTEM AND METHOD**

(71) Applicant: Siemens Rail Automation S.A.U., 28760 Tres Cantos (Madrid) (ES)
(72) Inventor: Toboso Perez, Paloma, E-28036 Madrid (ES); Costero Ranz, Lourdes, E-19005 Guadelajara (ES); Vera Mariño, Gonzalo Sebastian, E-28020 Madrid (ES); Ordoñez Pita, Alvaro, E-28007 Madrid (ES)
(74) Representative: Siemens Patent Attorneys

(57) **Abstract**

The present invention concerns a Predictive Air Renewal - hereafter PAIR - system and method for a vehicle (3) comprising passenger cars (31, 32), each passenger car (31, 32) comprising a ventilation system (310, 320), said PAIR system (1) comprising:
- at least one CO2 sensor (12) per passenger car (31, 32), each CO2 sensor (12) being configured for measuring a level of CO2 within the passenger car (31, 32) it is configured to equip;
- a passenger car occupancy prediction - hereafter PCOP - system (13) configured for calculating, before a stop of the vehicle (3) at a next station, a predicted occupancy of each passenger car (31, 32) after leaving said next station;
- a ventilation control system (11) configured for receiving as inputs, the CO2 level measured in each passenger car (31, 32) by each of said CO2 sensors (12), and before the stop of the vehicle (3) at said next station, said predicted occupancy of each passenger car, said ventilation control system being (13) being further configured for controlling, for each passenger car (31, 32), the passenger car ventilation system in function of the inputs received for said passenger car (31, 32).

## Description

The present invention concerns a Predictive Air Renovation System - hereafter PAIR - system and method for a vehicle.

The present invention is essentially related to the field of guided vehicles configured for transporting passengers, wherein the expression "guided vehicle" refers to public transport means such as subways, trains, or train subunits, which might be guided by one or several rails along a track, but also buses, etc., which might be guided by a line or a marking on a road or route. For said guided vehicles, guiding means like said track or marking, define a path or route followed by the vehicle, said route comprising one or several stops wherein passengers may enter or leave the vehicle.

One problematic of such vehicles concerns air renewal inside the vehicle, more precisely, in passenger cars. Indeed, depending on external atmospheric conditions as well as a number of passengers inside a car, the quality of air inside passenger cars may strongly decrease with time, becoming for instance stuffy, or increasing a feeling of stale air. This results then in a decrease of the comfort of passengers, e.g. in crowded cars during peak hours. This problematic is related to the ventilation system of passenger cars, which is usually working according to a predefined default ventilation level that is set for the whole day. In the best cases, the ventilation system may comprise different static degrees of ventilation that are adapted to different situations: e.g. more ventilation in peak hours, less in low occupancy periods.

However, the existing solutions are not efficient for providing an adequate air quality at any moment during the working hours of the vehicle. Additionally, they are usually not efficient in term of energy saving, because they are not adapted to a current occupation of passenger cars. It arrives for instance, that a ventilation system of a passenger car is set up for peak hours while said passenger car comprises a low number of passengers. This results in an uncomfortable situation for passengers and a waste of energy for the ventilation system, and thus the vehicle.

An objective of the present invention is to improve the quality of air in passenger cars. Improving air quality will have a direct impact on the comfort of passengers which will likewise increase. A better air quality will result thus in a more pleasant experience while travelling, especially in peak hours when cars are crowded. Advantageously, increasing air quality, notably air renewal, may reduce a transmission of airborne diseases: this might be of high importance during pandemic situations. Another objective of the present invention is to improve the efficiency of an on-board ventilation system in order to reduce its energy consumption without affecting the passenger experience.

For achieving said objectives, the present invention proposes a PAIR system and method for a vehicle according to the objects of the independent claims. Other advantages of the invention are presented in the dependent claims.

The PAIR system is configured for efficiently managing the ventilation system of each passenger car of the vehicle. For this purpose, the PAIR system is able to manage said ventilation systems independently from one another, so that the ventilation of each passenger car is adapted in function of an air quality predicted for said car.

The PAIR system according to the invention comprises:
- at least one carbon dioxide (CO2) sensor per passenger car, wherein each CO2 sensor is configured for being installed in a passenger car so that each passenger car of the vehicle be equipped with at least one CO2 sensor, each CO2 sensor being configured for measuring, inside the passenger car it is configured to be installed, and preferentially in real time, a level of CO2 for said passenger car;
   - a passenger car occupancy prediction - hereafter PCOP - system configured for calculating, before a stop of the vehicle at a next station, a predicted occupancy of each passenger car after leaving said next station. In other words, the PCOP system is configured for predicting the occupancy by passengers of each passenger car after leaving said next station. Said prediction or calculus is automatically realized by the PCOP system;
- a ventilation control system configured for receiving as inputs, the CO2 level measured in each passenger car by each of said CO2 sensors, and before the stop of the vehicle at said next station, said predicted occupancy of each passenger car, said ventilation control system being configured for controlling, for each passenger car, its ventilation system in function of the inputs received for said passenger car. According to the present invention, each ventilation system configured for ventilating a passenger car of the vehicle can be controlled by the ventilation control system independently from the other ventilation systems of the vehicle, i.e. the ventilation systems configured for ventilating the other passenger cars of said vehicle. By this way, the ventilation of each passenger car is independent from the ventilation of the other passenger cars.

The PAIR method according to the present invention is configured for efficiently managing the ventilation of passenger cars of a vehicle, wherein each passenger car comprises a ventilation system. The PAIR method comprises the following steps:
- measuring, in each passenger car of said vehicle, a CO2 level;
- calculating, before a stop of the vehicle at a next station, a predicted occupancy of each passenger car after leaving said next station, wherein said predicted occupancy is notably determined by estimating the incoming flow and outgoing flow of passengers for each passenger car at the platform of said next station;
- receiving, as inputs to a ventilation control system, the CO2 level measured in each passenger car, and before the stop of the vehicle at said next station, said predicted occupancy determined for each passenger car;
- for each passenger car, controlling its ventilation system by means of said ventilation control system in function of the inputs received for said passenger car.

Advantageously, the PAIR system and method enable to dynamically adapt the ventilation of each passenger car. Instead of setting default ventilation values which may not fit with a current degree of occupancy inside a passenger car, the present invention enables to determine in real time a degree of occupancy of a passenger car through CO2 level measurements and to determine the evolution of said occupancy by predicting the occupancy that will take place after leaving a next station. Advantageously, the power consumption of the passenger car ventilation system can thus be dynamically adapted on demand, in function of real time and predicted future occupancy values by passengers.

Further aspects of the present invention will be better understood through the following drawings, wherein like numerals are used for like and corresponding parts:
- Figure 1: schematic representation of a preferred embodiment of a PAIR system according to the invention.
- Figure 2: flowchart of a preferred PAIR method according to the invention.
- Figure 3: schematic representation of an air quality of each passenger car before reaching a next station.
- Figure 4: schematic representation of an occupancy by passengers of a platform of a next station.
- Figure 5: schematic representation of flows of passengers boarding passenger cars at a next station.
- Figure 6: schematic representation of a predicted air quality when leaving the next station.
- Figure 7: schematic representation of a ventilation intensity required before reaching a next station in order to keep an adequate air quality when leaving said next station.

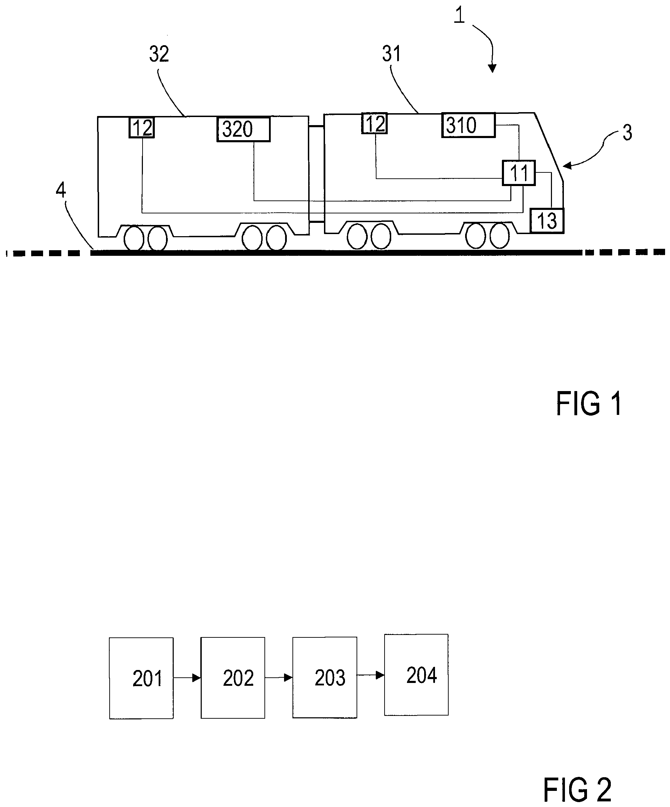

Figure 1 illustrates a preferred embodiment of a PAIR system 1 according to the invention. A vehicle 3, for instance a train moving on rails 4, comprises several passenger cars, for instance a first passenger car 31 and a second passenger car 32. Each passenger car 31, 32 comprises a ventilation system 310, 320 for ventilating the space comprised within the passenger car with air, so that the air inside the passenger car can be renewed. Preferentially, and as known in the art, each passenger car may form a close compartment with respect to its neighboring passenger cars, by automatically closing all doors of the passenger cars, for instance the passenger car doors that enable passengers to move from one passenger car to another one and/or doors that enable to enter/leave the passenger car. The PAIR system 1 according to the invention comprises a ventilation control system 11 configured for controlling each of the ventilation systems 310, 320 independently from one another and individually, so that the ventilation of each passenger car can be adjusted for keeping an air quality above a predefined value or limit for each passenger car. For this purpose, the PAIR system 1 further comprises one or several CO2 sensors 12, wherein at least one CO2 sensor 12 is installed inside each passenger car in order to measure a level of CO2 inside said passenger car, i.e. indoor (in the passenger compartment), wherein said level of CO2 is used by the PAIR system according to the invention for monitoring the air quality inside each of said passenger cars. Preferentially, different predefined levels of CO2, notably a critical CO2 level, are memorized in a memory of the ventilation control system 11, the latter being configured for comparing a currently measured CO2 level to the predefined levels of CO2 for determining, for each passenger car, if the air quality inside the passenger car is for instance high (e.g. CO2 level smaller than 1150ppm), good (e.g. CO2 level comprised between 1150ppm and 1450ppm), poor (e.g. CO2 level greater than the critical CO2 level, that is for instance 1450ppm). The PAIR system uses thus a measure of the concentration of CO2 inside each passenger car to determine the air quality (e.g. high, good, or poor quality) in the considered passenger car.

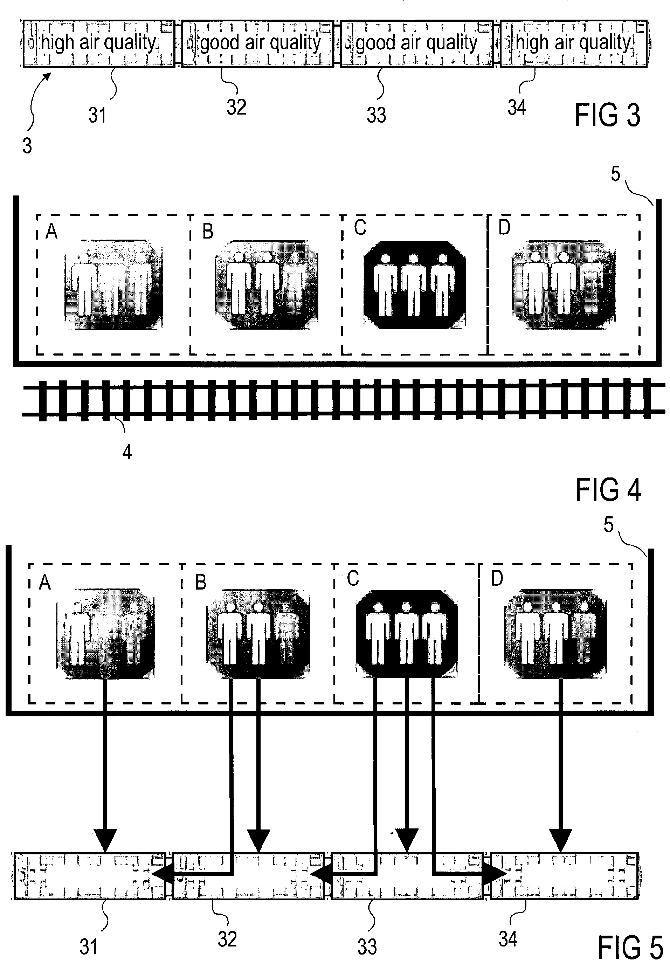

According to the present invention, the measure of the CO2 level is used by the PAIR system for determining whether the ventilation of the passenger car has to be activated, or increased up to some ventilation power, or decreased to some ventilation power, or stopped, e.g. by activating the ventilation system or putting the latter on standby, and if activated, then according to which ventilation power the ventilation system has to ventilate the passenger car. In particular, the ventilation control system is configured for controlling the ventilation system, e.g. for triggering, for each of said passenger cars, said activation, increase, decrease, stoppage, or putting on standby of the passenger car ventilation system, in function of said concentration of CO2, i.e. level of CO2, and thus associated air quality, measured inside the considered passenger car. As shown in Fig. 3, the CO2 level is measured in each passenger car 31, 32, 33, 34, preferentially continuously, in order to adapt the ventilation of the passenger car to the measured CO2 level so that the latter remain above said critical CO2 level. For instance, the measurements of CO2 levels by the CO2 detectors installed inside each passenger car show that, before reaching the next station, passenger cars 31 and 34 have a high air quality, and passenger cars 32 and 33 have a good air quality.

The system according to the invention further comprises a PCOP system 13 (see Fig. 1). The latter is configured for predicting an occupancy by passengers of each passenger car that will characterize the passenger car when the vehicle leaves a next station. It is thus a prediction of the occupancy of the passenger car after leaving the next station. The goal is to take into account the predicted occupancy for dynamically adapting, beforehand, i.e. in prevision of the predicted occupancy, the ventilation of each passenger car. Indeed, depending on the number of passengers boarding the different passenger cars of the vehicle at the next station, the air quality can rapidly decrease, going for instance from a good air quality to a poor quality, for instance going below the predefined critical CO2 level. In order to prevent such a decrease, notably in order to remain above said predefined critical CO2 level, the present invention proposes to adapt the ventilation of each passenger car already before it stops at the next station, e.g. 2-3 minutes before its stops, so that the air quality is put at a CO2 level, which, after the boarding of the passengers, i.e. after leaving said next station, will remain above said critical CO2 level, the critical CO2 level being thus never reached.

For this purpose, the PCOP system is capable of predicting, before the vehicle reaches the next station, the occupancy by passengers that will characterize each passenger car of the vehicle when the latter leaves the next station. According to a preferred embodiment, the PCOP system is configured for calculating said predicted occupancy from a distribution of an occupancy by passengers of a platform of the next station wherein the vehicle has to stop, by splitting for instance said in passenger car-sized areas and/or by using already defined platform sectors. For instance, the PCOP system comprises or is connected to a camera system configured for being installed at said next station in order to acquire, in real time, images of said platform, for instance of the platform sectors that are going to be served by said vehicle, the PCOP system further comprising an algorithm for calculating or estimating said predicted occupancy from a processing of the acquired images, wherein an area or sector of said platform is assigned to each passenger car of the vehicle, and the number of passengers occupying said area or sector is estimated or calculated. This is notably illustrated by Fig. 4, wherein the platform 5 of the next station may comprise different sectors, e.g. sectors A, B, C, and D, wherein each sector is occupied by a certain number of passengers waiting for the arrival of the vehicle. A camera system, comprising for instance one or several cameras installed on the platform 5, is configured for acquiring images of said platform 5 so that it becomes possible to automatically evaluate or count the number of passengers waiting for the incoming vehicle in each sector A, B, C, D of the platform, e.g. by automatically detecting human faces and counting the number of said human faces for each sector in images acquired by the camera system. Thus, the images acquired by the camera system are transmitted to the PCOP system, which is configured for determining or estimating, from said images, the number of passengers occupying each sector, and therefore the occupancy of each sector by passengers. The PCOP system further comprises, receives, or acquires information enabling to determine a correspondence between the sector location on the platform and the passenger car(s) that will be located at said sector location when the vehicle stops at said platform. In other words, the PCOP system is capable of determining or identifying which passenger car stops at which platform sector from received, acquired, or memorized data. The number of passenger cars, length of passenger cars, length of each platform sector, stopping position of the vehicle, etc., can be for instance taken into account by the PCOP system for determining a correspondence between the position of the passenger car when the vehicle is at standstill at the platform, and the platform sector served by said passenger car. As shown in Fig. 5, sector A of the platform 5 is going to be served by passenger car 31, then sector B by passenger car 32, sector C by passenger car 33, and sector D by passenger car 34.

Depending on the number of passengers occupying each platform and the number of places available in each passenger cars, a flow (inside the vehicle, after boarding) of passengers from one passenger car to a neighboring one may take place. As illustrated in Fig. 4 and 5, sector C can be for instance crowded and consequently, people boarding the passenger car 33 might not find an available seat in said passenger car 33 and might have to move to the neighboring passenger cars for finding an available seat. Preferentially, the PCOP system is configured for taking into account such a flow of passengers boarding the passenger cars. In particular, it can use any known in the art method for estimating the number of passengers already occupying a passenger car (e.g. based on on-board passenger counting from images of an on-board camera system, or based on the measured CO2 level, or passenger car weight, etc.) and estimate a number of available (free) seats for the passengers that will board the passenger car at said next station, and thus, it can determine from the knowledge of the distribution of the passengers at said next platform, the remaining number of passenger from each sector that will not find an available seat in the passenger car serving said sector and that will have thus to move to a neighboring passenger car for finding an available seat.

Preferentially, the PCOP system might use artificial intelligence for determining said flow of passengers boarding and/or leaving the vehicle. For instance, the PCOP system may use a machine learning algorithm for calculating the predicted occupancy, wherein the machine learning algorithm is configured for receiving as input a date and context data (e.g. number of passenger cars, current occupation of passenger cars, current air quality, working day, station name, time, event, distribution of passengers on the platform, etc.) and for outputting said predicted occupancy. It can use for this purpose history patterns or history data as additional input for estimating the flow of passengers boarding and/or leaving each passenger car. The usage of history patterns or data is especially important when the system is installed for the first time in an operating vehicle line, e.g. a train line. At that point, the algorithm needs to be trained and the initial calculations and/or decisions will be based on the known history patterns. As the PAIR system is operated and the PCOP system receives new input data over time, its decisions and calculations will be also based on the newly received input data via the learning of the algorithm and not only in the history patterns.

In particular, the PCOP system may use an algorithm configured for combining current real time data and history patterns or data for determining the occupancy of each passenger car after leaving the next station, wherein
- the current real time data comprises the evaluation of the number of passengers boarding each passenger car determined from said distribution of the occupancy by passengers of the platform of the next station and optionally the current number of passengers for each passenger car evaluated for instance from the current CO2 level, and
- history patterns or history data may provide an evaluation of the number of passengers leaving each passenger car determined in function of the current vehicle schedule (including the list of the stations where the vehicle stops, with arrival and departure times), and optionally in function also of the current number of passengers in each car.

For instance, history patterns and/or history data might be stored in a database, wherein each history pattern or history data comprises a set of context data including a time slot, a previous station, a directly next station, a number of passenger cars, and provides for each of said set of context data a percentage of passengers going to leave each passenger car. The PCOP might thus be configured for acquiring information about the vehicle, notably the number N of passenger cars and the vehicle schedule, and from this schedule it can determine the previous station (hereafter station A), the next station (hereafter station B) at which the vehicle will stop, and the arrival and/or departure time for said station B. From this information, it can then search in said history data or in all history patterns the one that is characterized by a set of context data wherein the time slot includes said arrival and/or departure time, and wherein said previous station is station A, said next station is station B, and the number of passenger cars is N, and it can then upload the percentage of passengers leaving each of the N passenger cars that is provided by the history pattern or data for this specific set of context data and determine, from this percentage and the current evaluation of the number of passengers occupying each passenger cars, the number of passengers leaving each passenger car. Additional context data might be taken into account, for instance, whether it is a working day or not, or whether there is a special event, like a football match, or a concert, etc.

Therefore, from the estimation of the number of passengers going to board each passenger car (said estimation being obtained from the distribution of passengers on the platform with respect to position of the passenger cars at said platform when the vehicle will be at standstill), optionally a current occupancy of each passenger car before reaching the next station, and optionally an estimated number of passengers leaving each passenger car, the PCOP system is able to predict the occupancy of each passenger car after leaving the next station, and consequently also an expected air quality after leaving said next station. Indeed, the PCOP system is configured for automatically predicting an air quality, i.e. a CO2 level, that will be reached in each passenger car after leaving the next station, said air quality being evaluated in function of the current air quality of the passenger car and its predicted occupancy by passenger when leaving the next station. Preferentially, in order to estimate the amount of CO2 in air, the PCOP system is configured for determining a value of ppm-per-passenger that is then used for estimating the CO2 level reached in each passenger car after leaving said next station. The predicted air quality or CO2 level of each passenger car is then communicated to the ventilation control system before stopping the train at said next station, and is taken into account by the ventilation control system for controlling the ventilation system of each passenger car in anticipation of its future occupancy. Therefore, before reaching the next station, e.g. few minutes before reaching the latter, the ventilation control system controls the ventilation system of each passenger car as if the current level of CO2 measured by the sensors was the predicted CO2 level, increasing for instance the ventilation of passenger cars who have currently a good level of CO2, but which would be characterized by a poor level of CO2 after leaving the next station.

The PAIR method according to the invention will now be described in more details with respect to Fig. 2, together with Fig. 3 to 7. Let's consider the vehicle 3 moving towards a next station wherein it has to stop, some passengers of the vehicle 3 leaving the vehicle 3 at said next station, and some other boarding at said next station.

At step 201, and as illustrated in Fig. 3, the CO2 level is measured in each passenger car 31, 32, 33, 34 of the vehicle by CO2 sensors 12. The level of CO2 can be continuously measured, intermittently measured, or the measurement might be triggered by a request or signal sent by the ventilation control system 11 for measuring a current level of CO2, for instance before reaching a next station. The level of CO2 represents, according to the present invention, a measure of how crowded the passenger car is, i.e. a measure of a current occupancy by passengers of the passenger car, and is used by the ventilation control system to set the power of the ventilation of the ventilation system of the passenger car, i.e. the degree of ventilation required to keep the current level of CO2 above a critical level. The ventilation control system comprises for instance a set of predefined CO2 levels, like said critical level, that are used as thresholds for switching between ventilation modes or intensities, i.e. for controlling the ventilation power of the ventilation system. Said modes or intensities of ventilation are for instance, high power, normal power, low power, stand-by, etc.

At step 202, the PCOP system, preferentially installed on-board the vehicle, calculates automatically, before reaching said next station, a predicted occupancy of each passenger car, wherein, for each passenger car, said predicted occupancy is the occupancy that is likely to occur after leaving said next station. Otherwise said, the predicted occupancy corresponds to a predicted CO2 level that is likely to be measured by the CO2 sensor after leaving said next station. Preferentially, the ventilation control system 11 or the PCOP system 13 may receive or acquire an expected arrival time T_a at the next station, which might be provided by the vehicle schedule, and only launch the determination of the predicted occupancy at T_a - t_d wherein t_d is a predefined time value typically comprised between 1 and 10 minutes.

For determining the predicted occupancy, the PCOP system may determine a distribution of passengers on the platform of the next station wherein the vehicle has to stop. For instance, it can be configured for acquiring in real time current images of said platform and for counting, in areas of the size of a passenger car or in platform sectors, the number of passengers waiting for the vehicle. For instance, knowing the position wherein the vehicle is going to stop at said platform, the PCOP system may determine said areas, wherein for each passenger car, a corresponding area of approximately the size of the passenger car is determined in the image of the platform, and the number of passengers waiting on said area and appearing in the image counted. If a platform comprises predefined sectors, like sectors A, B, C, D of Fig. 4, the PCOP system may determine the platform sector that will be served by each passenger car of the vehicle and assigned the number of passengers waiting on said platform sector to the passenger car(s) stopping at said platform sector (e.g., if two passenger cars serve sector C of the platform, then the number of passengers waiting on said platform are equivalently distributed in both passenger cars). According to another embodiment, the PCOP system may use artificial intelligence or history patterns configured for estimating the number of passengers going to board each passenger car and/or to leave each passenger car in function of at least the time, station, and itinerary of the vehicle, taking into account also preferentially the characteristics of the vehicle (e.g. type of vehicle, number of passenger cars, etc.).

As shown in Fig. 4, the PCOP system may split, in image acquired from the platform, the latter in 4 areas or sectors A, B, C, D, each area or sector being assigned to a passenger car, e.g. to only one of the passenger cars, of the vehicle and corresponding to the position where said passenger car will be at stand-still when the vehicle stops at said platform. From the images of the different areas or sector, the PCOP system is configured for counting the number of passengers waiting for the vehicle, e.g. by identifying and counting faces. It can for instance determine that the sectors A and D have a low occupancy, the sector B has a high occupancy and the sector E a middle occupancy. Additionally, the PCOP system may determine, e.g. from said history patterns or using said artificial intelligence, and for each passenger car, an estimated number of passengers that will leave the passenger car. For instance, and as already described, it can use an algorithm for estimating the number of passengers leaving each passenger car at the platform, said algorithm being based notably on statistics or history patterns or history data that give, for each vehicle stop (i.e. for each station wherein the vehicle has to stop), a percentage or a number of passengers leaving each passenger car, e.g. in function of the vehicle schedule. Additionally, and as shown in Fig. 5, the flow of passengers inside each passenger car during the boarding process might be taken into account for determining said predicted occupancy. Basically, if a passenger car is already crowded, then the PCOP system makes the assumption that entering passengers are likely to move to the next adjacent passenger car that is characterized by a lower occupancy. The displacements of passengers are represented by the arrows in Fig. 5, showing that passengers of the crowded sector C will enter passenger car 33. The latter will rapidly be completely occupied by passengers (no free seats), due to the high number of passengers that were waiting for the vehicle in the sector C. The passengers who boarded passenger car 33 and did not find a seating place will move to an adjacent passenger car 32 or 34. This flow of passengers inside the vehicle might be taken into account by the PCOP for correction purpose of the predicted occupancy. Thus, the PCOP system is able to calculate a predicted occupancy for each passenger car from an expected flow of passengers boarding and/or leaving said passenger car, and optionally from passenger flow that may take place within the vehicle for passengers moving from one passenger car to another one.

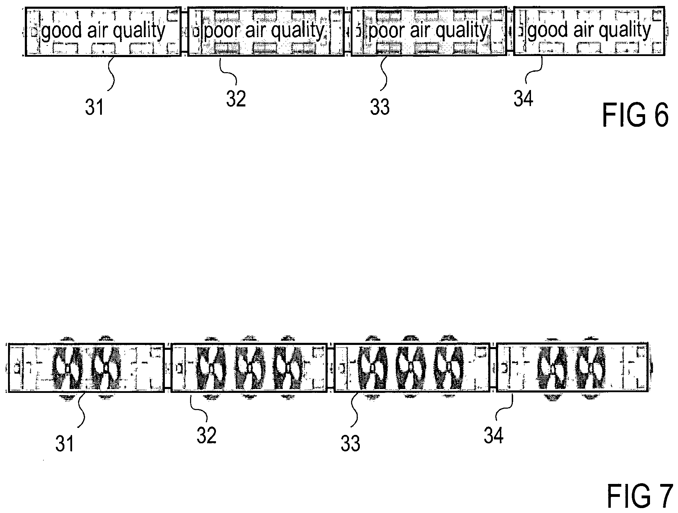

At step 203, the ventilation control system 11 receives, as inputs, the current CO2 level measured in each passenger car, and before the stop of the vehicle at said next station, the predicted occupancy determined by the PCOP system 13 for each passenger car. The ventilation control system 11 is then configured for calculating a predicted CO2 level from said predicted occupancy. For this purpose, it can use any predefined table or database describing the evolution of CO2 level in passenger car in function of the number of passengers in said passenger car. Fig. 6 illustrates the result of the calculation, by the ventilation control system 11 of the predicted CO2 level, and thus the predicted air quality for each passenger car after leaving the next station. It shows that passenger cars 32 and 33 will have a poor air quality due to the high number of boarding passengers, while passenger car 31 and 34 will still have a good air quality.

At step 204, the ventilation control system 11 is configured for controlling, for each passenger car, its ventilation system in function of the inputs received for said passenger car. Preferentially, the current CO2 level is used for controlling the power level (or ventilation mode) of the ventilation system of each passenger car during the displacement of the vehicle between two consecutive stations until at least the predefined time value t_d before reaching the next station. Thus, during the displacement of the vehicle between a station and the next station wherein the vehicle has to stop, the ventilation control system can acquire, for each passenger car, said CO2 level and control, in function of the measured CO2 level, the ventilation system of each passenger car so that the measured CO2 level remains at least above said critical CO2 level, e.g. so that the air quality remains good. For this purpose, it will for instance automatically increase the ventilation of the passenger car if the CO2 level exceeds a predefined threshold, notably said critical CO2 level, or put the ventilation system on stand-by as long as the air quality remains good.

Before reaching said next station, in particular from said predefined time value t_d before reaching the next station and as soon as the predicted occupancy has been determined by the PCOP system 13, the ventilation control system 11 is configured for controlling the ventilation of each passenger car in function of the predicted CO2 level, the latter prevailing over the currently measured CO2 level. This means that even if the air quality of a passenger car is currently good, the ventilation control system may activate or increase the ventilation in order to reach an higher air quality (e.g. going from good quality to high quality) in prevision of the number of passengers that are going to enter said passenger car at the next station, so that once the vehicle leaves the next station, the air quality remains above a predefined quality, i.e. a predefined CO2 level. This is illustrated by Fig. 3, 6 and 7. In Fig. 3, passenger cars 31 and 34 have a high air quality, and passenger cars 32 and 33 have a good air quality. In Fig. 6, the predicted CO2 level of passenger cars 31 and 34 corresponds to a good air quality, while the predicted CO2 level for passenger cars 32 and 33 corresponds to a poor air quality. Depending on the air quality that is wanted in the passenger car, for instance if the predefined CO2 level corresponds to a high air quality, then the ventilation control system will activate the ventilation in each passenger car at a power level, i.e. at an intensity, that is a function of the predicted occupancy, i.e. of the predicted CO2 level, putting for instance the ventilation system of passenger cars 32 and 33 to a high ventilation level, and the ventilation system of passenger cars 31 and 34 to a middle ventilation level the current air quality of each passenger car is shown, while it was, before reaching said next station, respectively at a middle ventilation level and low ventilation level.

In particular, if a travel time between a first station and a second consecutive station is very short, for instance almost equal or smaller than t_d, an additional consecutive next third station might be taken into consideration to compute a weighted predicted occupancy for each passenger car, wherein for instance the predicted occupancy of each passenger car is the same for the trip from the first station to the third and is equal for instance to the average of the predicted occupancy from the first station to the second station and the predicted occupancy from the second station to the third station. This weighted predicted occupancy can be then used by the system 1 for controlling the intensity of the ventilation system of each passenger car as previously described.

To summarize, the present invention provides a system 1 and a method that are able to predict, before reaching a next station by means of said vehicle, an occupancy of each passenger car of said vehicle after leaving said next station, said prevision of the future occupancy of each passenger car being used for controlling the intensity of ventilation of the ventilation system of each passenger car, in order for instance to improve air quality in advance, i.e. in prevision of the future occupancy, or also in order to spare energy, by decreasing for instance the ventilation if the predicted occupancy is lower than a current occupancy.

## Claims

1. A Predictive Air Renewal - hereafter PAIR - system (1) for a vehicle (3) comprising passenger cars (31, 32), each passenger car (31, 32) comprising a ventilation system (310, 320), said PAIR system (1) comprising:
- at least one CO2 sensor (12) per passenger car (31, 32), each CO2 sensor (12) being configured for measuring a level of CO2 within the passenger car (31, 32) it is configured to equip;
- a passenger car occupancy prediction - hereafter PCOP - system (13) configured for calculating, before a stop of the vehicle (3) at a next station, a predicted occupancy of each passenger car (31, 32) after leaving said next station;
- a ventilation control system (11) configured for receiving as inputs, the CO2 level measured in each passenger car (31, 32) by each of said CO2 sensors (12), and before the stop of the vehicle (3) at said next station, said predicted occupancy of each passenger car, said ventilation control system being (13) being further configured for controlling, for each passenger car (31, 32), the passenger car ventilation system in function of the inputs received for said passenger car (31, 32).

2. PAIR system (1) according to claim 1, wherein the PCOP system (13) is configured for calculating said predicted occupancy from a distribution of an occupancy by passengers of a platform of a next station wherein the vehicle (3) has to stop.

3. PAIR system (1) according to claim 2, wherein the PCOP system (13) comprises a camera system configured for being installed at said next station in order to acquire, in real time, images of the platform that is going to be served by said vehicle at said next station, the PCOP system (13) further comprising an algorithm configured for calculating said predicted occupancy from the acquired images by determining, for each passenger car, a number of passengers waiting on the platform for boarding said passenger car.

4. PAIR system (1) according to one of the claims 1 to 3, wherein the ventilation control system (11) is configured for predicting, before stopping at the next station and for each passenger car, an air quality that will characterize the passenger car after leaving said next station, and for adapting the ventilation of said passenger car in function of the predicted air quality before stopping at said next station.

5. PAIR system (1) according to one of the claims 1 to 4, wherein the PCOP system (13) is configured for calculating said predicted occupancy from an expected flow of passengers boarding and/or leaving the passenger cars (31, 32).

6. PAIR system (1) according to one of the claims 1 to 5, wherein the PCOP system (13) uses a machine learning algorithm for calculating said predicted occupancy, wherein said machine learning algorithm is configured for receiving as input a date and context data and for outputting said predicted occupancy.

7. PAIR system (1) according to one of the claims 1 to 6, wherein the ventilation control system (11) is configured for automatically choosing a ventilation intensity of the ventilation system of each passenger car in function of said predicted occupancy determined for the considered passenger car.

8. PAIR method for a vehicle (3) comprising passenger cars (31, 32), each passenger car comprising a ventilation system (310, 320), the PAIR method comprising the steps:
- measuring (201), in each passenger car (31, 32) of said vehicle (3), a CO2 level;
- calculating (202), before a stop of the vehicle (3) at a next station, a predicted occupancy of each passenger car (31, 32) after leaving said next station;
- receiving (203), as inputs to a ventilation control system (11), the CO2 level measured in each passenger car, and before the stop of the vehicle at said next station, said predicted occupancy determined for each passenger car (31, 32);
- for each passenger car, controlling (204) the passenger car ventilation system (310, 320) by means of said ventilation control system (11) in function of the inputs received for said passenger car (31, 32) .

9. PAIR method according to claim 8, comprising calculating said predicted occupancy from an estimation of a distribution of an occupancy by passengers of a platform of a next station wherein the vehicle has to stop.

10. PAIR method according to claim 9, comprising calculating said predicted occupancy from a processing of images of the platform of said next station that is going to be served by said vehicle (3).

11. PAIR method according to one of the claims 8 to 10, comprising predicting, before stopping at the next station and for each passenger car (31, 32), an air quality that will characterize the passenger car after leaving said next station, and adapting the ventilation of said passenger car (31, 32) in function of the predicted air quality before stopping at said next station.

12. PAIR method according to one of the claims 8 to 11, comprising calculating said predicted occupancy from an expected flow of passengers boarding and/or leaving the passenger cars.

13. PAIR method according to one of the claims 8 to 12, comprising using a machine learning algorithm for calculating said predicted occupancy, wherein said machine learning algorithm is configured for receiving as input a date and context data and for outputting said predicted occupancy.

14. PAIR method according to one of the claims 8 to 13, comprising automatically choosing a ventilation intensity of the ventilation system (310, 320) of each passenger car (31, 32) in function of said predicted occupancy determined for the considered passenger car (31, 32).
